# FASCICULE DE BREVET EUROPEEN

(11) **EP 4 303 053 B1**
(45) Date de publication et mention de la délivrance du brevet: **12.02.2025**
(21) Numéro de dépôt: 23180590.4
(22) Date de dépôt: 21.06.2023
(51) Int. Cl.: B60K 13/04

(54) **VÉHICULE DOTÉ D'UNE PATTE DE FIXATION D'UN RÉSERVOIR D'URÉE PROTÉGÉE DE LA CHALEUR**
FAHRZEUG MIT EINER WÄRMEGESCHÜTZTEN BEFESTIGUNGSLASCHE FÜR EINEN HARNSTOFFBEHÄLTER
VEHICLE WITH A HEAT-PROTECTED BRACKET FOR ATTACHING AN UREA TANK

(30) Priorité: 04.07.2022 FR 2206723
(43) Date de publication de la demande: 10.01.2024
(73) Titulaire: Renault s.a.s, 92100 Boulogne Billancourt (FR)
(72) Inventeur: SULA, Igor, 041402 BUCAREST (RO)

(56) Documents cités:
- WO-A1-2018/229369
- FR-A1- 3 002 000
- FR-A1- 3 086 631
- FR-A1- 3 113 869

## Description

La présente invention concerne véhicule doté d'une patte de fixation d'un réservoir d'urée protégée de la chaleur.

Le réservoir d'urée est généralement fixé sous le véhicule au moyen d'une patte de fixation et à proximité d'une ligne d'échappement. Ce réservoir et cette patte de fixation sont donc susceptibles de monter en température sous l'effet des gaz d'échappement chauds circulant dans cette ligne d'échappement. Pour empêcher qu'un tel phénomène ne se produise, un écran thermique pourrait être interposé entre la patte de fixation et la ligne d'échappement.

Or, le point de fixation du réservoir d'urée avec des éléments de filtration dudit réservoir viendrait en sandwich avec le point de fixation de l'écran thermique, entrainant une discontinuité entre l'écran de protection thermique et la patte de fixation. Il en résulte que la patte de fixation du réservoir et ledit réservoir demeureraient exposés à la chaleur diffusée par la ligne d'échappement, car l'écran thermique ne couvrirait pas efficacement la patte de fixation.

Des véhicules comprenant un réservoir d'urée sont connus des documents FR 3 002 000 A1, FR 3 113 869 A1, FR 3 086 631 A1 et WO 2018/229369 A1.

Un véhicule selon l'invention, comme défini dans la revendication 1, comprend un réservoir d'urée fixé audit véhicule au moyen d'une patte de fixation située à proximité d'une ligne d'échappement et qui est configurée pour être protégée de la chaleur émise par ladite ligne d'échappement.

L'invention a pour objet un véhicule comprenant un réservoir d'urée, une patte de fixation et une ligne d'échappement, ledit réservoir étant fixé à un élément de structure du véhicule à proximité de la ligne d'échappement, au moyen de la patte de fixation.

Selon l'invention, la patte de fixation comprend une couche de protection thermique destinée à protéger ladite patte de fixation de la chaleur émise par la ligne d'échappement qui est traversée par des gaz d'échappement chauds. La présence d'une patte de fixation dotée elle-même d'une couche de protection thermique permet de s'affranchir de la présence d'un écran thermique inséré entre ladite patte de fixation et la ligne d'échappement. En effet, il existe des configurations pour lesquelles la mise en place d'un écran thermique entre la patte de fixation et la ligne d'échappement est compliquée, voire impossible. Le principe d'un véhicule selon l'invention est de déporter cet écran thermique sur la patte de fixation elle-même du réservoir d'urée pour éviter tout problème lié à la mise en œuvre de cet écran thermique sous le véhicule. La couche de protection thermique peut revêtir différentes formes :
- elle peut être distincte de la patte de fixation originelle et être ensuite apposée contre la patte de fixation par différentes techniques telles que par exemple un surmoulage,
- elle peut faire partie intégrante du matériau constitutif de la patte de fixation, de manière à obtenir en finalité une patte de fixation réalisée en un seul matériau ayant des propriétés d'isolation thermique.

Selon une caractéristique possible de l'invention, la patte de fixation comprend un corps principal profilé, et la couche de protection thermique prolonge le corps principal profilé sans introduire avec ledit corps de reliefs d'interface. De cette manière, la patte de fixation ne change pas fondamentalement de forme par rapport à celle des pattes de fixation existantes, et peut donc être utilisée directement dans le véhicule sans avoir à apporter le moindre aménagement dans ledit véhicule.

Selon une caractéristique possible de l'invention, la couche de protection thermique est moulée sur le corps principal de la patte de fixation. Il s'agit d'une technique bien maitrisée, permettant à la couche de protection thermique d'adopter n'importe quelle forme en fonction de la géométrie du moule utilisé. Avec une telle précision de forme, la patte de fixation peut facilement s'adapter à son environnement et aux différents éléments l'entourant.

Selon une caractéristique possible de l'invention, la patte de fixation est montée sur le véhicule de sorte que la couche de protection thermique soit insérée entre le corps principal profilé de ladite patte de fixation et la ligne d'échappement. De cette manière, la couche de protection thermique sert d'écran entre la patte de fixation et la ligne d'échappement, pour empêcher une surchauffe de la patte de fixation sous l'effet de la chaleur émise par ladite ligne d'échappement.

Selon une caractéristique possible de l'invention, la patte de fixation comprenant la couche de protection thermique présente un tronçon arrondi destiné à venir enserrer une partie arrondie du réservoir d'urée et un tronçon allongé prolongeant directement le tronçon arrondi et destiné à venir se placer contre un rebord dudit réservoir d'urée, lesdits deux tronçons comprenant chacun une partie de la couche de protection thermique. La patte de fixation a une forme qui lui permet de s'adapter à son environnement immédiat. Il est important de souligner que, quelle soit la forme de la patte de fixation, la couche de protection thermique s'étend sur toute la zone de ladite patte de fixation qui est exposée à la chaleur émise par la ligne d'échappement, sans laisser subsister de zones qui ne seraient pas protégées par la couche de protection thermique.

Selon une caractéristique possible de l'invention, la patte de fixation possède au moins un trou traversant destiné au passage d'une vis pour la fixation de la patte de fixation au réservoir d'urée. Ce mode de fixation de la patte de fixation au réservoir d'urée est particulièrement adapté à un véhicule selon l'invention, mais n'est pas limitatif. Un système de fixation par clippage de cette patte de fixation sur le réservoir d'urée peut par exemple être également envisagé.

L'invention a pour autre objet une patte de fixation pour l'arrimage d'un réservoir d'urée à l'élément de structure d'un véhicule selon l'invention.

Selon l'invention, la patte de fixation comprend un corps principal et une couche de protection thermique, ladite couche de protection thermique étant moulée sur le corps principal de la patte de fixation.

Selon une caractéristique possible de l'invention, la couche de protection thermique prolonge le corps principal profilé sans introduire avec ledit corps de reliefs d'interface.

Selon une caractéristique possible de l'invention, le corps principal et la couche de protection thermique représentent deux parties distinctes de ladite patte de fixation.

L'invention a pour autre objet un procédé de fabrication d'un véhicule selon l'invention.

Selon l'invention, le procédé comprend les étapes suivantes :
- une étape de fabrication d'une patte de fixation au moyen d'un moulage de la couche de protection thermique sur le corps principal,
- une étape de fabrication du véhicule au moyen d'un arrimage de ladite patte de fixation sur l'élément de structure du véhicule pour la fixation du réservoir d'urée.

Un tel procédé souligne le fait que la patte de fixation du réservoir d'urée peut être fabriquée dans un endroit à part, qui n'est pas forcément le long d'une chaine d'assemblage d'un véhicule. De cette manière, la fabrication de cette patte de fixation ne nécessite aucun espace de dégagement le long de la chaine d'assemblage, permettant de désengorger cette chaine d'assemblage et de libérer de l'espace pour d'autres fonctions.

Un véhicule selon l'invention présente l'avantage de posséder une patte de fixation d'un réservoir d'urée qui est munie d'une protection thermique, ladite patte de fixation pouvant être fabriquée dans un lieu à part avant d'être acheminée vers une chaine de montage d'un véhicule. La fabrication d'une telle patte de fixation ne risque donc pas d'encombrer cette ligne de montage. La présence d'une patte de fixation dotée d'un couche de protection thermique présente l'avantage de pouvoir s'affranchir de la présence d'un écran thermique pour protéger la patte de fixation contre la chaleur émise par la ligne d'échappement, dont la fabrication est consommatrice de temps et génère des coûts supplémentaires.

On donne ci-après une description détaillée d'un mode de réalisation préféré d'un véhicule selon l'invention en se référant aux figures suivantes :
[Fig. 1] est une vue du dessous d'un véhicule selon l'invention,
[Fig. 2] est une vue en perspective du dessous d'un véhicule selon l'invention,
[Fig. 3] est une vue en perspective sous un autre angle du dessous du véhicule de la figure 2,
[Fig. 4] est une vue en perspective d'une patte de fixation selon l'invention,
[Fig. 5] est une vue de face de la patte de fixation de la figure 4 montée sur un réservoir d'urée d'un véhicule selon l'invention
[Fig. 6] est une vue de face à 180° de la vue de face de la figure 5,
[Fig. 7] est une vue à 90°de la vue de face de la figure 6.

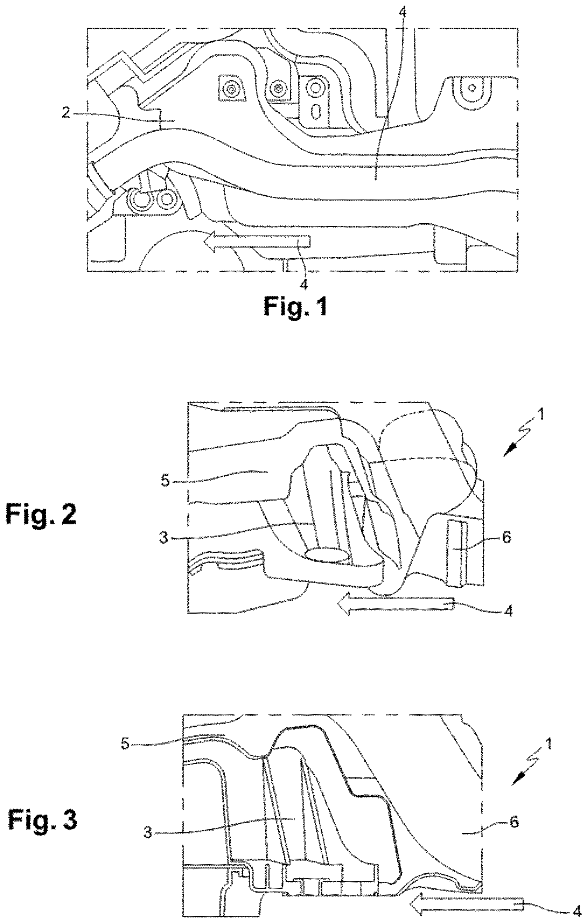

En se référant aux figures 2 et 3, un véhicule 1 selon l'invention, comprend un réservoir d'urée 2, qui est fixé sous ledit véhicule 1 au moyen d'une patte de fixation 3. Le réservoir d'urée 2 ainsi que la patte de fixation 3 sont placés à proximité d'une ligne d'échappement 4 permettant d'évacuer des gaz d'échappement en provenance d'un moteur thermique du véhicule 1, vers l'extérieur dudit véhicule 1. Puisque les gaz d'échappement transitant par cette ligne d'échappement 4 sont chauds, les risques de voir surchauffer certains éléments situés à proximité de cette ligne d'échappement 4 parmi lesquels le réservoir d'urée 2 et la patte de fixation 3, sont importants. Afin d'empêcher une telle surchauffe de ces éléments, il est prévu d'interposer des écrans 5, 6 de protection thermique entre la ligne d'échappement 4 et lesdits éléments. Or, la fixation du réservoir d'urée 2 sur des éléments de filtration de ce réservoir 2, entraine une discontinuité entre les écrans thermiques 5, 6 permettant à la chaleur émise par la ligne d'échappement 4 de passer entre ces écrans thermiques 5, 6 et d'irradier la patte de fixation 3 du réservoir d'urée 2. Cette patte de fixation 3 ainsi exposée à la chaleur produite par la ligne d'échappement 4, risque donc d'être altérée au cours du temps et donc de ne plus remplir correctement sa fonction de fixation du réservoir d'urée 2.

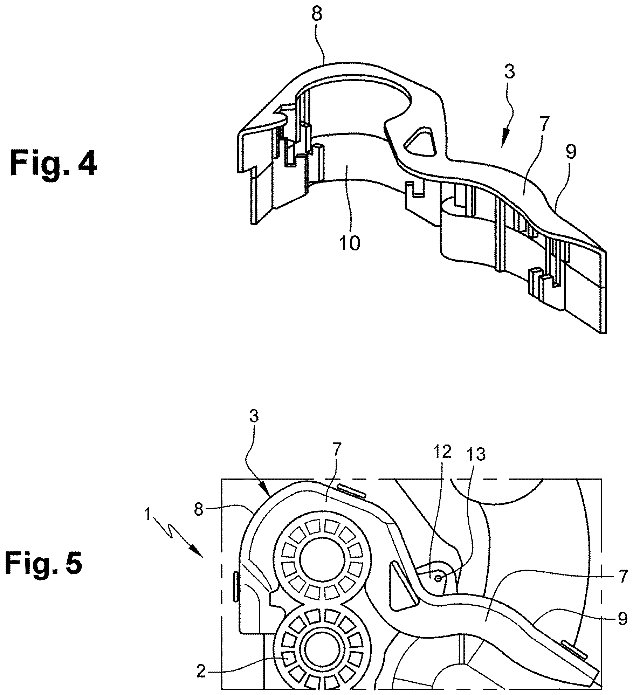

En se référant aux figures 4, 5, 6 et 7, afin de palier à cette dégradation de la patte de fixation 3 sous l'effet de la chaleur émise par la ligne d'échappement 4, un véhicule 1 selon l'invention comprend une patte de fixation 3 du réservoir d'urée 2, qui est dotée d'une couche 7 de protection thermique. La patte de fixation 3 comprend un corps principal 10, et la couche de protection thermique 7 vient s'ajouter à ce corps principal 10. La couche de protection 7 peut revêtir toute forme, mais est préférentiellement moulée sur le corps principal 10 de la patte de fixation 3 en constituant une extension dudit corps principal. De cette manière, la couche de protection thermique 7 n'est pas étroitement mélangée au corps principal 10 mais constitue une partie bien distincte dudit corps principal 10.

En se référant à la figure 4, la couche de protection thermique 7 prolonge idéalement le corps principal 10, sans créer avec celui-ci de reliefs d'interface, donnant l'impression que le corps principal 10 et la couche 7 de protection thermique ont été fabriqués d'un seul tenant. La patte de fixation 3 composée du corps principal 10 et la couche de protection 7 comprend schématiquement un tronçon arrondi 8 destiné à venir enserrer une partie arrondie du réservoir d'urée 2 et un tronçon allongé 9 prolongeant directement le tronçon arrondi 8 et destiné à venir se placer contre un rebord dudit réservoir 2. Il est à noter que la couche de protection thermique 7 est à la fois présente dans le tronçon arrondi 8 et dans le tronçon allongé 9.

En se référant aux figures 5, 6, 7, la patte de fixation 3 dotée de sa couche 7 de protection thermique enserre étroitement le réservoir d'urée 2 sans laisser subsister avec celui-ci de jeux. La patte de fixation 3 comprenant le corps principal 10 et la couche de protection thermique 7 est placée autour du réservoir d'urée 2, de sorte que la couche de protection thermique 7 s'interpose entre le corps principal 10 de la patte de fixation 3 et la ligne d'échappement 4. De cette manière, la couche de protection thermique 7 va protéger le corps principal 10 de la patte de fixation 3, de la chaleur qui va être émise par la ligne d'échappement 4.

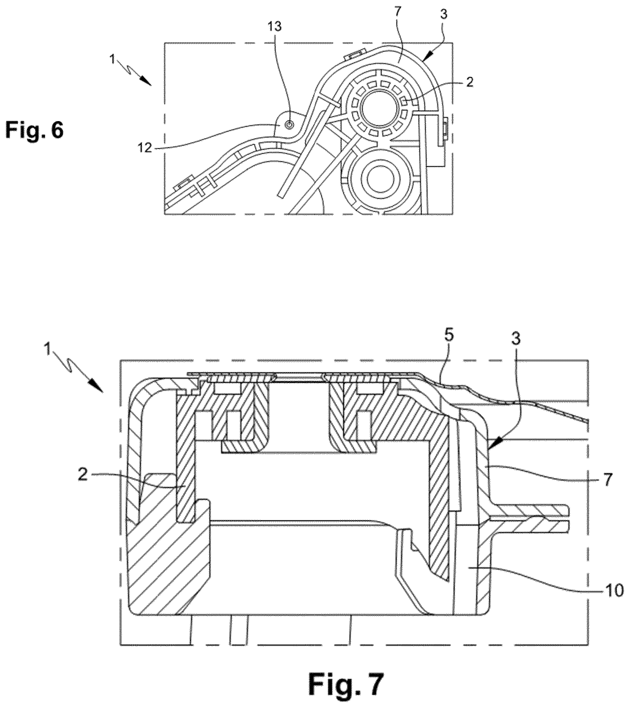

En se référant aux figures 5 et 6, la patte de fixation 3 comprend une excroissance 12 dotée d'un trou traversant 13 destiné au passage d'une vis pour fixer la patte de fixation au réservoir d'urée 2. Une première composante de cette excroissance 12 provient du corps principal 10 et une deuxième composante de celle-ci provient de la couche de protection thermique 7.

Un procédé de fabrication d'un véhicule 1 selon l'invention comprend les étapes suivantes :
- une étape de fabrication d'une patte de fixation 3 d'un réservoir d'urée 2, au moyen d'un moulage de la couche de protection thermique 7 sur le corps principal 10,
- une étape d'acheminement de la patte de fixation 3 à un emplacement précis le long d'une chaine d'assemblage du véhicule 1,
- une étape de montage du véhicule au moyen d'un arrimage de ladite patte de fixation 3 sur un élément de structure du véhicule pour la fixation du réservoir d'urée 2.

## Revendications

1. Véhicule (1) comprenant un réservoir d'urée (2), une patte de fixation (3) et une ligne d'échappement (4), ledit réservoir (2) étant fixé à un élément de structure du véhicule à proximité de la ligne d'échappement (4) au moyen de la patte de fixation (3), **caractérisé en ce que** la patte de fixation (3) comprend une couche (7) de protection thermique destinée à protéger ladite patte de fixation (3) de la chaleur émise par la ligne d'échappement (4) qui est traversée par des gaz d'échappement chauds.

2. Véhicule selon la revendication 1, **caractérisé en ce que** la patte de fixation (3) comprend un corps principal (10) profilé, et **en ce que** la couche (7) de protection thermique prolonge le corps principal (10) profilé sans introduire avec ledit corps (10) de reliefs d'interface.

3. Véhicule selon la revendication 2, **caractérisé en ce que** la couche (7) de protection thermique est moulée sur le corps principal (10) de la patte de fixation (3).

4. Véhicule selon l'une quelconque des revendications 2 ou 3, **caractérisée en ce que** la patte de fixation (3) est montée sur le véhicule de sorte que la couche (7) de protection thermique soit insérée entre le corps principal (10) profilé de ladite patte de fixation (3) et la ligne d'échappement (4).

5. Véhicule selon l'une quelconque des revendications 1 à 4, **caractérisé en ce que** la patte de fixation (5) comprenant la couche (7) de protection thermique présente un tronçon arrondi (8) destiné à venir enserrer une partie arrondie du réservoir d'urée (2) et un tronçon allongé (9) prolongeant directement le tronçon arrondi (8) et destiné à venir se placer contre un rebord dudit réservoir (2) d'urée, et **en ce que** lesdits deux tronçons (8, 9) comprennent chacun une partie de la couche (7) de protection thermique.

6. Véhicule selon l'une quelconque des revendications 1 à 5, **caractérisé en ce que** la patte de fixation (3) possède au moins un trou (13) traversant destiné au passage d'une vis pour la fixation de la patte de fixation (3) au réservoir d'urée (2).

7. Patte de fixation (3) pour l'arrimage d'un réservoir d'urée (2) à l'élément de structure d'un véhicule (1) selon la revendication 3, **caractérisée en ce que** la patte de fixation (3) comprend un corps principal (10) et une couche (7) de protection thermique, et **en ce que** la couche (7) de protection thermique est moulée sur le corps principal (10) de la patte de fixation (3).

8. Patte de fixation selon la revendication 7, **caractérisée en ce que** la couche (7) de protection thermique prolonge le corps principal (10) profilé sans introduire avec ledit corps (10) de reliefs d'interface.

9. Patte de fixation selon l'une quelconque des revendications 7 ou 8, **caractérisée en ce que** le corps principal (10) et la couche (7) de protection thermique représentent deux parties distinctes de ladite patte de fixation (3).

10. Procédé de fabrication d'un véhicule (1) selon la revendication 3, **caractérisé en ce qu'**il comprend les étapes suivantes :
- une étape de fabrication d'une patte de fixation (3) au moyen d'un moulage de la couche (7) de protection thermique sur le corps principal (10),
- une étape de fabrication du véhicule (1) au moyen d'un arrimage de ladite patte de fixation (3) sur l'élément de structure du véhicule pour la fixation du réservoir d'urée (2).

## Patentansprüche

1. Fahrzeug (1), welches einen Harnstoffbehälter (2), eine Befestigungslasche (3) und eine Abgasleitung (4) umfasst, wobei der Behälter (2) mittels der Befestigungslasche (3) an einem Strukturelement des Fahrzeugs in der Nähe der Abgasleitung (4) befestigt ist, **dadurch gekennzeichnet, dass** die Befestigungslasche (3) eine Wärmeschutzschicht (7) umfasst, die dazu bestimmt ist, die Befestigungslasche (3) vor der Wärme zu schützen, die von der Abgasleitung (4), welche von heißen Abgasen durchströmt wird, abgegeben wird.

2. Fahrzeug nach Anspruch 1, **dadurch gekennzeichnet, dass** die Befestigungslasche (3) einen Profilhauptkörper (10) umfasst, und dadurch, dass die Wärmeschutzschicht (7) den Profilhauptkörper (10) verlängert, ohne mit dem Körper (10) Grenzflächenreliefs zu erzeugen.

3. Fahrzeug nach Anspruch 2, **dadurch gekennzeichnet, dass** die Wärmeschutzschicht (7) auf den Hauptkörper (10) der Befestigungslasche (3) aufgeformt ist.

4. Fahrzeug nach einem der Ansprüche 2 oder 3, **dadurch gekennzeichnet, dass** die Befestigungslasche (3) derart am Fahrzeug angebracht ist, dass die Wärmeschutzschicht (7) zwischen dem Profilhauptkörper (10) der Befestigungslasche (3) und der Abgasleitung (4) eingefügt ist.

5. Fahrzeug nach einem der Ansprüche 1 bis 4, **dadurch gekennzeichnet, dass** die Befestigungslasche (5), welche die Wärmeschutzschicht (7) umfasst, einen abgerundeten Abschnitt (8) umfasst, der dazu bestimmt ist, einen abgerundeten Teil des Harnstoffbehälters (2) zu umspannen, und einen lang gestreckten Abschnitt (9), der den abgerundeten Abschnitt (8) direkt verlängert und dazu bestimmt ist, an einer Randleiste des Harnstoffbehälters (2) zur Anlage zu kommen, und dadurch, dass die zwei Abschnitte (8, 9) jeweils einen Teil der Wärmeschutzschicht (7) umfassen.

6. Fahrzeug nach einem der Ansprüche 1 bis 5, **dadurch gekennzeichnet, dass** die Befestigungslasche (3) mindestens ein Durchgangsloch (13) besitzt, das für den Durchgang einer Schraube zur Befestigung der Befestigungslasche (3) an dem Harnstoffbehälter (2) bestimmt ist.

7. Befestigungslasche (3) zum Ankoppeln eines Harnstoffbehälters (2) an das Strukturelement eines Fahrzeugs (1) nach Anspruch 3, **dadurch gekennzeichnet, dass** die Befestigungslasche (3) einen Hauptkörper (10) und eine Wärmeschutzschicht (7) umfasst, und dadurch, dass die Wärmeschutzschicht (7) auf den Hauptkörper (10) der Befestigungslasche (3) aufgeformt ist.

8. Befestigungslasche nach Anspruch 7, **dadurch gekennzeichnet, dass** die Wärmeschutzschicht (7) den Profilhauptkörper (10) verlängert, ohne mit dem Körper (10) Grenzflächenreliefs zu erzeugen.

9. Befestigungslasche nach einem der Ansprüche 7 oder 8, **dadurch gekennzeichnet, dass** der Hauptkörper (10) und die Wärmeschutzschicht (7) zwei verschiedene Teile der Befestigungslasche (3) darstellen.

10. Verfahren zur Herstellung eines Fahrzeugs (1) nach Anspruch 3, **dadurch gekennzeichnet, dass** es die folgenden Schritte umfasst:
- einen Schritt der Herstellung einer Befestigungslasche (3) durch ein Aufformen der Wärmeschutzschicht (7) auf den Hauptkörper (10),
- einen Schritt der Herstellung des Fahrzeugs (1) durch ein Ankoppeln der Befestigungslasche (3) an das an das Strukturelement eines Fahrzeugs zur Befestigung des Harnstoffbehälters (2).

## Claims

1. Vehicle (1) comprising a urea tank (2), a fastening tab (3) and an exhaust line (4), said tank (2) being fastened to a structural element of the vehicle near the exhaust line (4) by means of the fastening tab (3), **characterized in that** the fastening tab (3) comprises a thermal protection layer (7) intended to protect said fastening tab (3) from the heat emitted by the exhaust line (4) that is passed through by hot exhaust gases.

2. Vehicle according to Claim 1, **characterized in that** the fastening tab (3) comprises a profiled main body (10), and **in that** the thermal protection layer (7) extends the profiled main body (10) without introducing interface reliefs with said body (10).

3. Vehicle according to Claim 2, **characterized in that** the thermal protection layer (7) is moulded on the main body (10) of the fastening tab (3).

4. Vehicle according to either one of Claims 2 and 3, **characterized in that** the fastening tab (3) is mounted on the vehicle such that the thermal protection layer (7) is inserted between the profiled main body (10) of said fastening tab (3) and the exhaust line (4).

5. Vehicle according to any one of Claims 1 to 4, **characterized in that** the fastening tab (5) comprising the thermal protection layer (7) has a rounded section (8) intended to grip a rounded part of the urea tank (2) and an elongate section (9) directly extending the rounded section (8) and intended to be placed against a rim of said urea tank (2), and **in that** said two sections (8, 9) each comprise a part of the thermal protection layer (7).

6. Vehicle according to any one of Claims 1 to 5, **characterized in that** the fastening tab (3) has at least one through-hole (13) intended for the passage of a screw for the fastening of the fastening tab (3) to the urea tank (2).

7. Fastening tab (3) for the anchoring of a urea tank (2) to the structural element of a vehicle (1) according to Claim 3, **characterized in that** the fastening tab (3) comprises a main body (10) and a thermal protection layer (7), and **in that** the thermal protection layer (7) is moulded on the main body (10) of the fastening tab (3).

8. Fastening tab according to Claim 7, **characterized in that** the thermal protection layer (7) extends the profiled main body (10) without introducing interface reliefs with said body (10).

9. Fastening tab according to either one of Claims 7 and 8, **characterized in that** the main body (10) and the thermal protection layer (7) represent two distinct parts of said fastening tab (3).

10. Method for manufacturing a vehicle (1) according to Claim 3, **characterized in that** it comprises the following steps:
- a step of manufacturing a fastening tab (3) by means of moulding the thermal protection layer (7) on the main body (10),
- a step of manufacturing the vehicle (1) by means of anchoring said fastening tab (3) on the structural element of the vehicle for the fastening of the urea tank (2).
